# EUROPÄISCHE PATENTSCHRIFT

(11) **EP 1 877 173 B1**
(45) Veröffentlichungstag und Bekanntmachung des Hinweises auf die Patenterteilung: **10.06.2009**
(21) Anmeldenummer: 06753438.8
(22) Anmeldetag: 27.04.2006
(51) Int. Cl.: B01J 8/06, B01J 8/04, B01J 8/02

(54) **VERFAHREN UND REAKTOR ZUR DURCHFÜHRUNG ENDOTHERMER KATALYTISCHER REAKTIONEN**
METHOD AND REACTOR FOR CARRYING OUT ENDOTHERMIC CATALYTIC REACTIONS
PROCEDE ET REACTEUR POUR EFFECTUER DES REACTIONS CATALYTIQUES ENDOTHERMIQUES

(30) Priorität: 04.05.2005 DE 102005020943
(43) Veröffentlichungstag der Anmeldung: 16.01.2008
(73) Patentinhaber: Linde Aktiengesellschaft, 80807 München (DE)
(72) Erfinder: KANDZIORA, Bernd, 82065 Baierbrunn (DE); LAHNE, Ulrich, 82041 Deisenhofen (DE); MÖBUS, Helge, 97702 Münnerstadt (DE); RANKE, Harald, 82343 Pöcking (DE)
(86) Internationale Anmeldenummer: PCT/EP2006/003943
(87) Internationale Veröffentlichungsnummer: WO 2006/117136

(56) Entgegenhaltungen:
- EP-A- 0 360 505
- EP-A- 0 435 642
- EP-A- 0 615 949
- US-A- 1 826 548
- US-A- 5 156 821
- US-A- 5 382 271
- US-A1- 2003 054 213
- US-B1- 6 221 117

## Beschreibung

Die Erfindung betrifft ein Verfahren zur endothermen katalytischen Umsetzung eines Einsatzstromes, wobei der Einsatzstrom in zumindest zwei Teilströme aufgeteilt wird, die parallel durch wenigstens teilweise mit einer Schüttung aus Katalysatormaterial oder einer katalytisch aktiven strukturierten Packung gefüllte oder wenigstens teilweise innen mit einem katalytisch aktiven Material oberflächenbeschichtete, im Feuerraum eines Reaktors angeordnete Reaktorrohre geführt werden, wobei jeder Teilstrom den Feuerraum in zumindest zwei Passagen.ganz oder teilweise durchquert und die Strömungsrichtungen in zwei aufeinander folgenden Passagen im Wesentlichen entgegengesetzt gerichtet sind.

Weiterhin betrifft die Erfindung eine Vorrichtung zur Durchführung des erfindungsgemäßen Verfahrens.

Verfahren und Vorrichtungen zur endothermen katalytischen Umsetzung von Stoffströmen, wie z. B. die Dampfreformierung von Kohlenwasserstoffen zur Erzeugung von Synthesegas, sind seit langem Stand der Technik. Ein Gemisch aus Kohlenwasserstoffen und Wasserdampf wird dabei durch einen Reaktor (Reformer) geleitet und hauptsächlich zu Wasserstoff und Kohlenmonoxid umgewandelt.

Bei den Reformern handelt es sich vorwiegend um decken-, seiten- oder bodengefeuerte Röhrenöfen, die für große Produktionsleistungen (einige 1000m_{N}³/h Wasserstoff) bevorzugt in Kastenbauweise ausgeführt sind; für kleine Kapazitäten ist auch die Topfform Stand der Technik. Derartige Reformer sind beispielsweise aus "Ullmann's Encyclopedia of Industrial Chemistry", 6th ed., vol. 17, p. 110-115 bekannt. Die äußere Umhüllung eines Reformers besteht aus einem Blechmantel, der zur Wärmeisolierung mit einer aus mehreren Schichten aufgebauten feuerfesten Innenauskleidung versehen ist, die den Feuerraum umschließt. Der Feuerraum ist von Reaktorrohren durchzogen, deren innere Oberflächen katalytisch aktiv sind, oder die ganz oder zumindest teilweise im Bereich des Feuerraums mit einer Schüttung aus einem geeigneten Katalysatormaterial oder einer katalytisch aktiven strukturierten Packung gefüllt sind. In den Reaktorrohren erfolgt eine Umsetzung der Ausgangsstoffe in einer endothermen chemischen Reaktion. Bei boden- und deckengefeuerten Röhrenöfen werden turbulente Freistrahlbrenner mit Zwangsluftzuführung eingesetzt. Die Rauchgase, die entlang der Reaktorrohre geführt werden, übertragen auf einer relativ kurzen Strecke einen Großteil der für die Reaktion benötigten Wärme sehr effektiv durch Strahlung auf die Reaktorrohre; die restliche Wärme wird durch Konvektion übertragen. Bei seitengefeuerten Röhrenöfen werden Brenner anderen Typs mit anderen Flammenformen verwendet, mit denen die Seitenwände des Feuerraums erhitzt werden. Die Wärmübertragung auf die Reaktorrohre erfolgt in diesen Fällen vorwiegend durch die Strahlung der heißen Feuerraumwände, aber auch durch Konvektion. Nach dem Abzug aus dem Feuerraum, wird den abgekühlten Rauchgasen in Wärmetauschern, z. B. für die Vorwärmung des Einsatzstromes oder zur Erzeugung von Prozessdampf, weiter Energie entzogen, so dass sie schließlich mit einer Temperatur von lediglich ca. 200°C über einen Kamin aus der Anlage geleitet werden.

Die Reaktorrohre sind so angebracht, dass ihre Enden über den äußeren Blechmantel bzw. die Feuerraumisolierung hinausragen. Der Einsatzstrom wird über einen Verteiler geleitet und dabei in mehrere Teilströme aufgeteilt, die anschließend den Reaktorrohren auf der einen Seite des Reformers zugeleitet werden. Auf der anderen Seite des Reformers sind die Enden der Reaktorrohre über einen Sammler miteinander verbunden, über den das reformierte Gas (Produktstrom) aus dem Reformer abgezogen und gegebenenfalls einer Weiterverarbeitung zugeführt wird.

Die Dampfreformierung von Kohlenwasserstoffen läuft bei Temperaturen von ca. 900°C und einem erhöhten Druck ab. Um unter diesen Bedingungen einen hohen Grad an Zuverlässigkeit gewährleisten zu können, kommen heute Rohre zum Einsatz, die im Schleudergussverfahren aus nickelhaltigen Legierungen hergestellt werden. Da solche Rohre teuer sind und einen wesentlichen Teil der Investitionskosten für einen Dampfreformer ausmachen, wird angestrebt, eine vorgegebene Produktionsleistung mit einer möglicht geringen Anzahl von Reaktorrohren zu realisieren.

Eine geringere Rohrzahl bedeutet gleichzeitig, dass der Eintrittsverteiler und der Austrittssammler einfachere Konstruktionen aufweisen, und daher mit geringeren Kosten gefertigt werden können. Da weniger Rohre sich im Feuerraum gegenseitig weniger stark beschatten, kann darüber hinaus bei einer Verringerung der Rohrzahl die Wärme besser durch Strahlung auf die Reaktorrohre übertragen werden.

Der Strömungsquerschnitt für den Einsatzstrom errechnet sich für einen Röhrenofen als die Summe der Querschnitte aller Reaktorrohre. Daher steigt mit geringer werdender Anzahl der Rohre - und gleich bleibenden lichten Rohrdurchmessern - die Gasgeschwindigkeit in den Reaktorrohren. Die Übertragung der Reaktionswärme aus dem Feuerraum wird dadurch zwar verbessert, gleichzeitig steigt aber auch der Druckverlust über den Reformer. Aus wirtschaftlichen Gründen soll dieser Druckverlust einen Grenzwert, der typischer Weise zwischen 1,5 und 5bar liegt, nicht überschreiten. Ein weiterer Effekt, der den Druckverlust bei der Reduzierung der Zahl der Reaktorrohre ansteigen lässt, ist die Vergrößerung der Rohrlängen. Eine solche ist notwendig, da die Katalysatormenge, die der Produktionsleistung proportional und weitgehend unabhängig von der Strömungsgeschwindigkeit in den Reaktorrohren ist, auf weniger Rohre verteilt werden muss.

In der Praxis haben sich bei Reformern für große Produktionsleistungen Längen von ca. 12 m und mehr für die Reaktorrohre als sinnvoll herausgestellt. Die sich daraus ergebenden Bauhöhen erlauben es meist nicht mehr, solche Reformer in Werkstattfertigung herzustellen und sie anschließend an ihren Aufstellungsort zu transportieren. Vielmehr ist eine Fertigung unter hohen Kosten vor Ort kaum zu vermeiden

Die Bauhöhen von Reformern können reduziert werden, wenn der Einsatzstrom bzw. die aus dem Einsatzstrom erzeugten Teilströme in mehr als einer Passage durch den Feuerraum des Reformers geführt wird. Aus der Offenlegungsschrift EP0435642A2 sind ein Verfahren und ein Reformer bekannt, wobei ein Einsatzstrom durch konzentrisch angeordnete, mit Katalysatormaterial befüllte Rohre in zwei entgegengesetzt gerichteten Passagen durch einen Feuerraum geführt wird. Der Feuerraum wird zentral mit einem Brenner beheizt. Ähnliche Prinzipien werden auch in EP0360505A2, US2003/0054123A1 und EP0615949A2 beschrieben. Weiterhin ist die Mehrpassführung eines Einsatzstromes durch konzentrisch angeordnete, mit Katalysatormaterial befüllte Rohre aus den Schriften US1826548 und US5382271 bekannt. Die in den aufgeführten Schriften beschriebenen Reaktorrohre bestehen aus Rohren mit unterschiedlichen Durchmessern (konzentrischen Anordnung); zu ihrer Herstellung sind zumindest zwei unterschiedliche Arten von Rohren notwendig.

Der Erfindung liegt daher die Aufgabe zugrunde, ein Verfahren der eingangs genannten Art sowie eine Vorrichtung zur Durchführung des Verfahrens so auszugestalten, dass die Wirtschaftlichkeit der endothermen katalytischen Umsetzung von Einsatzströmen im Vergleich zum Stand der Technik verbessert wird.

Diese Aufgabe wird verfahrensseitig erfindungsgemäß dadurch gelöst, dass jeder der Teilströme den Feuerraum im Inneren eines, durch gerade verlaufende, parallele, mit einem geeigneten Verbindungsrohr verbundene Rohrstücke gebildeten Reaktorrohres durchquert und der Feuerraum durch wenigstens einen Brenner auf eine Weise beheizt wird, die für eine starke Umwälzung der Feuerraumatmosphäre sorgt.

Auf seinem Weg von einem Ende eines Reaktorrohres zum anderen wird die Strömungsrichtung jedes Teilstromes wenigstens einmal umgekehrt, so dass man von mehreren Passagen sprechen kann, in denen jeder Teilstrom durch den Feuerraum geführt wird. In den Passagen, die sich zweckmäßigerweise in ihren Längen nur wenig unterscheiden, werden die Teilströme durch gerade verlaufende, parallele Rohrstücke geleitet, die über einen geeigneten Krümmer miteinander verbunden sind. Bevorzugt verlaufen die Passagen vertikal, wobei die Teilströmungen in der ersten Passage von oben nach unten oder von unten nach oben geführt werden. Hierdurch wird es möglich, die Bauhöhe eines Reaktors im Vergleich zum Stand der Technik bei gleicher Produktionsleistung erheblich zu verkleinern. Beispielsweise wird die Bauhöhe bei einer 2-Passführung nahezu halbiert. Die Teilströme werden in den Reaktorrohren so durch den Feuerraum geführt, dass sie innerhalb des Feuerraumes (intern) oder/und außerhalb des Feuerraums. (extern) umgelenkt werden.

Der Feuerraum wird bevorzugt durch Brenner beheizt, deren Rauchgase einen hohen Austrittsimpuls haben (Hochgeschwindigkeitsbrenner), und die am Boden oder/und an der Decke oder/und an den Seitenwänden des Feuerraumes angeordnet sind. In Verbindung mit speziellen Einbauten und einer geeigneten Brenneranordnung wird eine starke Verwirbelung und Führung der Rauchgase (Feuerraumatmosphäre) erreicht, sodass sich im gesamten Feuerraum ein homogenes Temperaturfeld mit weitgehend moderaten Gradienten ausbildet. Die Reaktorrohre können mit geringen Abständen zueinander im Feuerraum angeordnet werden, da der Anteil der Reaktionswärme, die durch die Strahlung der heißen Brennerflamme übertragen wird gegenüber dem Stand der Technik reduziert ist, und eine Abschattung der Reaktorrohre untereinander sich daher kaum störend auswirkt. Die staken Verwirbelungen führen zu einer effektiveren Wärmeübertragung von den Rauchgasen auf die Reaktorrohre. Bei gleicher Leistung kann daher die Oberfläche der Reaktorrohre verkleinert und der Reaktor kompakter gebaut werden.

Temperaturunterschiede im Feuerraum führen zu Ausbiegungen der Reaktorrohre. Um zu verhindern, dass die Reaktorrohre sich berühren, werden sie daher mit einem gewissen Sicherheitsabstand in den Feuerraum eingebaut. Je geringer die Temperaturunterschiede sind, desto kleiner kann dieser Sicherheitsabstand gewählt werden. Auch dieser Effekt erlaubt es, den Reaktor kompakter und damit kostengünstiger zu fertigen. Gleichzeitig wird die Lebensdauer der Reaktorrohre erhöht, da kleinere Temperaturunterschiede im Feuerraum auch geringere mechanische Spannungen in den Reaktorrohren zur Folge haben.

Die Erfindung betrifft ferner eine Vorrichtung zur endothermen katalytischen Umsetzung eines Einsatzstromes, wobei der Einsatzstrom in zumindest zwei Teilströme aufgeteilt wird, die parallel durch wenigstens teilweise mit einer Schüttung aus Katalysatormaterial oder einer katalytisch aktiven strukturierten Packung gefüllte-, oder wenigstens teilweise innen mit einem katalytisch aktiven Material oberflächenbeschichtete, im Feuerraum eines Reaktors angeordnete Reaktorrohre geführt werden, von denen jedes so geformt ist, dass die Teilströme in zumindest zwei Passagen ganz oder teilweise durch den Feuerraum leitbar sind, wobei die Strömungsrichtungen von zwei aufeinander folgenden Passagen im Wesentlichen entgegengesetzt gerichtet verlaufen.

Vorrichtungsseitig wird die gestellte Aufgabe erfindungsgemäß dadurch gelöst, dass die Reaktorrohre im Bereich der Feuerraumpassagen im Wesentlichen gleich lange und parallele Bereiche aufweisen, die durch gerade Rohrstücke gebildet werden die über geeignete Verbindungsrohre miteinander verbunden sind und der Feuerraum mit wenigstens einem Brenner ausgestattet ist, der für eine starke Umwälzung der Feuerraumatmosphäre sorgt.

Die Reaktorrohre bestehen bevorzugt aus mindestens zwei geraden Rohrstücken, die über geeignete Verbindungsrohre miteinander verbunden sind. Besonders bevorzugt sind die geraden Rohrstücke mit gleichen Durchmessern ausgeführt. Die geraden Rohrstücke sind ganz oder teilweise mit einer Schüttung aus einem geeigneten Katalysatormaterial gefüllt oder innen mit einer Oberflächenbeschichtung aus einem katalytisch aktiven Material versehen.

Eine Ausgestaltung der erfindungsgemäßen Vorrichtung sieht vor, dass die Reaktorrohre hängend im Feuerraum angeordnet sind, während eine andere Ausgestaltung eine stehende Anordnung vorsieht. Im Falle einer Ausführung der Reaktorrohre mit zwei geraden Rohrstücken und hängender Anordnung, befindet sich der Krümmer zweckmäßiger Weise innerhalb des Feuerraums; bei einer stehenden Anordnung verbindet ein Krümmer die beiden geraden Rohrstücke bevorzugt außerhalb des Feuerraums.

Zur Beheizung des Feuerraums ist die erfindungsgemäße Vorrichtung bevorzugt mit mindestens einem Brenner ausgestattet, dessen Rauchgase mit hohem Impuls in den Feuerraum eintreten. Zweckmäßiger Weise sind die Brenner am Boden oder/und der Decke oder/und den Seitenwänden des Feuerraums angeordnet. Der Feuerraum enthält bevorzugt Einbauten, die in Verbindung mit den hohen Rauchgasgeschwindigkeiten zu einer starken Verwirbelung der Feuerraumatmosphäre führen. Zweckmäßiger Weise handelt es sich dabei um rohrförmige Konstruktionen; durch welche die Verbrennungsgase zwangsgeführt werden und die gleichzeitig den freien Strömungsquerschnitt für die Rauchgase einschränken.

Eine weitere Ausgestaltung der erfindungsgemäßen Vorrichtung sieht vor, den Feuerraum mit speziellen Regenerativ- oder Rekupeartivbrennern zu beheizen, welche eine starke Umwälzung der Feuerraumatmosphäre bewirken. Über die Brennerköpfe werden nicht nur Brenngas und Oxidationsmittel (z. B. Luft) in den Feuerraum eingebracht, sondern auch heiße Rauchgase aus dem Feuerraum abgesaugt. Ein zentraler Abzug für die Rauchgase ist bei dieser Ausgestaltung der Erfindung nicht vorhanden.

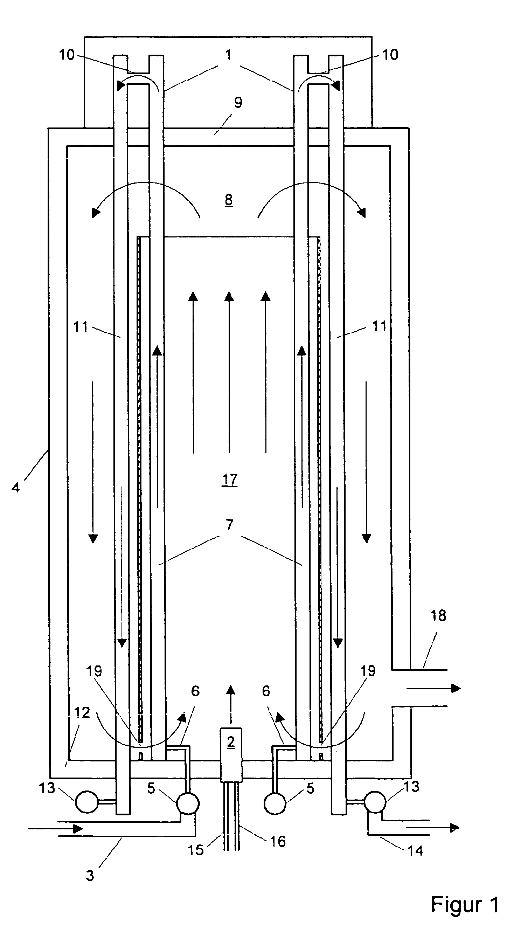

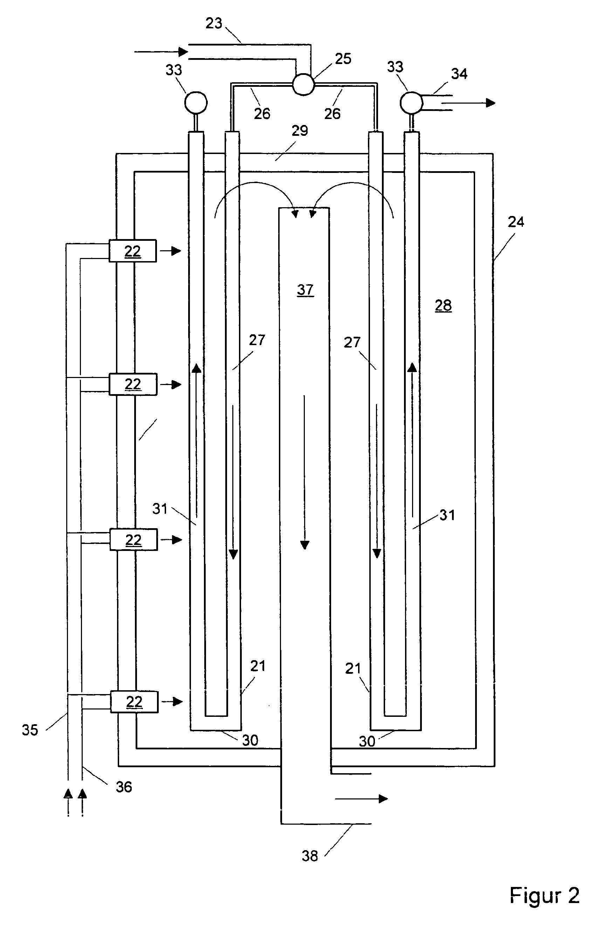

Im Folgenden soll die Erfindung anhand zweier Ausführungsbeispiele näher erläutert werden, die in den Figuren 1 und 2 schematisch dargestellt sind:

Das erste Ausführungsbeispiel betrifft einen Reformer zur Produktion von 2500m_{N}³/h Wasserstoff durch die Dampfreformierung von Methan (CH₄). Zwölf senkrecht stehende Reaktorrohre 1 sind kreisförmig um einen zentralen Hochgeschwindigkeitsbrenner 2 angeordnet. Die Figur 1 zeigt einen Schnitt entlang der Reaktorlängsachse, in welchem der besseren Übersichtlichkeit halber nur zwei der Reaktorrohre 1 eingezeichnet sind.

Der aus CH₄ und Wasserdampf bestehende Einsatzstrom wird über Leitung 3 dem Reformer 4 zugeführt. Im Verteiler 5 wird er in zwölf Teilströme 6 aufgeteilt und auf die mit geeignetem Katalysatormaterial gefüllten Reaktorrohre 1 verteilt. In einer ersten Passage 7 fließt jeder der Teilströme 6 in geraden Rohrstücken senkrecht nach oben und verlässt den zylindrischen Feuerraum 8 durch dessen Decke 9. Außerhalb des Feuerraums 8 wird jeder Teilstrom 6 über ein Verbindungsrohr 10 zu einer zweiten Passage 11 übergeleitet, die ebenfalls in einem geraden Rohrstück, jedoch senkrecht nach unten durch den gesamten Feuerraum 8 verläuft. Am Ende der Reaktorrohre 1, die durch den Feuerraumboden 12 aus dem Feuerraum 8 herausgeführt werden, werden die Teilströme 6 über den Sammler 13 vereinigt und über die Leitung 14 als Synthesegas abgezogen.

Der an der Unterseite des Reformers 4 zentral angeordnete Hochgeschwindigkeitsbrenner 2, der über die Leitungen 15 und 16 mit Brenngas und Luft versorgt wird, feuert senkrecht nach oben in den Feuerraum 8. Seine Rauchgase, die wegen ihrer hohen Austrittsgeschwindigkeiten eine starke Verwirbelung der Feuerraumatmosphäre bewirken, werden durch das ebenfalls zentral angeordnete Rohr 17 senkrecht nach oben, in Richtung der ersten Passage 7, geleitet. Zwischen der Decke 9 des Feuerraums 8 und dem oberen Ende des Rohres 17 werden sie umgelenkt, um anschließend von oben nach unten, in Richtung der zweiten Passage 11, zu strömen, bevor sie über Leitung 18 aus dem Reaktor 4 abgezogen werden bzw. über Durchlässe 19 zurück auf die Innenseite des Rohres 17 strömen und auf diese Weise einen Gasumlauf im Feuerraum 8 erzeugen. Die Reaktorrohre 1 sind so angeordnet, dass die Teilströme 6 in ihren ersten Passagen 7 zum größten Teil entlang der Innenseite und in ihren zweiten Passagen 11 zum größten Teil entlang der Außenseite des Rohres 17 strömen. Das Rohr 17 schränkt den Strömungsquerschnitt für die Verbrennungsgase ein und steigert dadurch deren Strömungsgeschwindigkeit und Verwirbelung. Dies hat zur Folge, dass die Reaktionswärme sehr effektiv durch Konvektion von den heißen Verbrennungsgasen auf die Reaktorrohre übertragen wird.

Das zweite Ausführungsbeispiel betrifft ebenfalls einen Reformer zur Produktion von 2500m_{N}³/h Wasserstoff durch die Dampfreformierung von Methan (CH₄). Zwölf an der Decke 29 des Feuerraums 28 aufgehängte Reaktorrohre 21 sind um ein zentrales Rohr 37 angeordnet und werden über acht Brenner 22, die in vier Ebenen angeordnet sind, beheizt. Die Figur 2 zeigt einen Schnitt entlang der Reaktorlängsachse, in welchem der besseren Übersichtlichkeit halber nur zwei der Reaktorrohre 21 und vier der Brenner 22 eingezeichnet sind.

Der aus CH₄ und Wasserdampf bestehende Einsatzstrom wird über Leitung 23 dem Reformer 24 zugeführt. Im Verteiler 25 wird er in zwölf Teilströme 26 aufgeteilt und auf die mit geeignetem Katalysatormaterial gefüllten Reaktorrohre 21 verteilt. Die Teilströme 26 werden in einer ersten Passage 27 in geraden Rohrstücken von oben nach unten durch den Feuerraum 28 geführt, durch Krümmer 30 umgelenkt, in der zweiten Passage 31, in ebenfalls geraden Rohrstücken, von unten nach oben wieder aus dem Feuerraum 28 herausgeführt und im Sammler 33 vereinigt. Über Leitung 34 werden sie schließlich als Synthesegastrom aus der Anlage abgezogen.

Die Beheizung des Feuerraums erfolgt in diesem Ausführungsbeispiel über acht Seitenwandbreriner 22, bei denen es sich um Hochgeschwindigkeitsbrenner handelt, die paarweise auf vier Ebenen verteilt angeordnet sind. Die Brenner, die durch den großen Impuls ihrer Rauchgase eine starke Verwirbelung der Feuerraumatmosphäre bewirken, werden über die Leitungen 35 und 36 mit Brenngas und Luft versorgt. Verwirbelung und Strömungsgeschwindigkeit der Rauchgase werden zusätzlich durch das Abzugsrohr 37 erhöht, das sich nahezu über die gesamte Höhe und entlang der Längsachse des Feuerraums 28 erstreckt und den Strömungsquerschnitt für die Rauchgase einschränkt. Über die Leitung 38 werden die Rauchgase aus dem Reformer 24 abgeführt.

## Patentansprüche

1. Verfahren zur endothermen katalytischen Umsetzung eines Einsatzstromes, wobei der Einsatzstrom in zumindest zwei Teilströme aufgeteilt wird, die parallel durch wenigstens teilweise mit einer Schüttung aus Katalysatormaterial oder einer katalytisch aktiven strukturierten Packung gefüllte oder wenigstens teilweise innen mit einem katalytisch aktiven Material oberflächenbeschichtete, im Feuerraum eines Reaktors angeordnete Reaktorrohre geführt werden, wobei jeder Teilstrom den Feuerraum in zumindest zwei Passagen ganz oder teilweise durchquert und die Strömungsrichtungen in zwei aufeinander folgenden Passagen im Wesentlichen entgegengesetzt gerichtet sind, **dadurch gekennzeichnet, dass** jeder der Teilströme den Feuerraum im Inneren eines, durch gerade verlaufende, parallele, mit einem geeigneten Verbindungsrohr verbundene Rohrstücke gebildeten Reaktorrohres durchquert und der Feuerraum durch wenigstens einen Brenner auf eine Weise beheizt wird, die für eine starke Umwälzung der Feuerraumatmosphäre sorgt.

2. Verfahren nach Anspruch 1, **dadurch gekennzeichnet, dass** der Feuerraum durch Bodenbrenner oder/und Deckenbrenner oder/und Seitenwandbrenner beheizt wird.

3. Verfahren nach einem der Ansprüche 1 oder 2, **dadurch gekennzeichnet, dass** die Rauchgase mit Hilfe von geeigneten Einbauten verwirbelt und durch den Feuerraum geführt werden.

4. Vorrichtung zur endothermen katalytischen Umsetzung eines Einsatzstromes, wobei der Einsatzstrom in zumindest zwei Teilströme aufgeteilt wird, die parallel durch wenigstens teilweise mit einer Schüttung aus Katalysatormaterial oder einer katalytisch aktiven strukturierten Packung gefüllte oder wenigstens teilweise innen mit einem katalytisch aktiven Material oberflächenbeschichtete, im Feuerraum eines Reaktors angeordnete Reaktorrohre geführt werden, von denen jedes so geformt ist, dass die Teilströme in zumindest zwei Passagen ganz oder teilweise durch den Feuerraum leitbar sind, wobei die Strömungsrichtungen von zwei aufeinander folgenden Passagen im Wesentlichen entgegengesetzt gerichtet verlaufen, **dadurch gekennzeichnet, dass** die Reaktorrohre im Bereich der Feuerraumpassagen im Wesentlichen gleich lange und parallele Bereiche aufweisen, die durch gerade Rohrstücke gebildet werden die über geeignete Verbindungsrohre miteinander verbunden sind und der Feuerraum mit wenigstens einem Brenner ausgestattet ist, der für eine starke Umwälzung der Feuerraumatmosphäre sorgt.

5. Vorrichtung nach Anspruch 4, **dadurch gekennzeichnet, dass** der oder die Brenner am Boden oder/und an der Decke oder/und an den Seitenwänden des Feuerraums angeordnet sind.

6. Vorrichtung nach einem der Ansprüche 4 oder 5, **dadurch gekennzeichnet, dass** die Brenner Rauchgase erzeugen, die einen hohen Austrittsimpuls aufweisen.

7. Vorrichtung nach einem der Ansprüche 4 bis 6, **dadurch gekennzeichnet, dass** der Feuerraum geeignete Einbauten zur Verwirbelung und Führung der durch die Brenner erzeugten Rauchgase enthält.

## Claims

1. Method for the endothermic catalytic conversion of a batch stream, the batch stream being divided into at least two part streams which are routed in parallel through reactor tubes which are filled at least partially with a heap of catalyzer material or of a catalytically active structured packing or are surface-coated at least partially on the inside with a catalytically active material and which are arranged in the furnace space of a reactor, each part stream passing completely or partially through the furnace space in at least two passages, and the flow directions in two successive passages being directed essentially opposite one another, **characterized in that** each of the part streams passes through the furnace space inside a reactor tube formed by straight running, parallel tube pieces connected to a suitable connecting tube, and the furnace space being heated by at least one burner in a way which ensures a high circulation of the furnace space atmosphere.

2. Method according to Claim 1, **characterized in that** the furnace space is heated by floor burners and/or ceiling burners and/or side wall burners.

3. Method according to either one of Claims 1 and 2, **characterized in that** the flue gases are swirled with the aid of suitable fittings and are routed through the furnace space.

4. Device for the endothermic catalytic conversion of a batch stream, the batch stream being divided into at least two part streams which are routed in parallel through reactor tubes which are filled at least partially with a heap of catalyzer material or catalytically active structured packing or are surface-coated at least partially on the inside with a catalytically active material and which are arranged in the furnace space of a reactor, each of the reactor tubes being shaped such that the part streams can be conducted completely or partially through the furnace space in at least two passages, the flow directions of two successive passages running essentially opposite to one another, **characterized in that** the reactor tubes have in the region of the furnace space passages parallel regions of essentially equal length which are formed by straight tube pieces which are connected to one another via suitable connecting tubes, and the furnace space being equipped with at least one burner which ensures a high circulation of the furnace space atmosphere.

5. Device according to Claim 4, **characterized in that** the burner or burners is or are arranged on the floor and/or on the ceiling and/or on the side walls of the furnace space.

6. Device according to one of Claims 4 or 5, **characterized in that** the burners generate flue gases which have a high outflow momentum.

7. Device according to one of Claims 4. to 6, **characterized in that** the furnace space contains suitable fittings for swirling and routing the flue gases generated by the burners.

## Revendications

1. Procédé pour effectuer des réactions catalytiques endothermiques d'un courant entrant, le courant entrant étant divisé en au moins deux courants partiels, qui sont guidés en parallèle à travers des tuyaux de réacteur disposés dans la chambre de chauffe d'un réacteur, remplis au moins partiellement d'une charge en vrac de matériau catalyseur ou d'une garniture structurée à action catalytique ou au moins partiellement revêtus en surface à l'intérieur d'un matériau à action catalytique, chaque courant partiel transitant dans la chambre de chauffe totalement ou partiellement en au moins deux passages et les directions d'écoulement étant essentiellement orientées en sens contraire dans des passages successifs, **caractérisé en ce que** chacun des courants partiels transite dans la chambre de chauffe à l'intérieur d'un tuyau de réacteur formé par des pièces de tuyau s'étendant en ligne droite, parallèles, reliées par un tuyau de liaison approprié et la chambre de chauffe est chauffée par au moins un brûleur de manière à assurer un brassage intense de l'atmosphère de la chambre de chauffe.

2. Procédé selon la revendication 1, **caractérisé en ce que** la chambre de chauffe est chauffée par un brûleur de fond et/ou un brûleur de toit et/ou un brûleur de paroi latérale.

3. Procédé selon une des revendications 1 ou 2, **caractérisé en ce que** les gaz de combustion sont soumis à des turbulences à l'aide d'éléments encastrés appropriés et sont guidés à travers la chambre de chauffe.

4. Dispositif pour effectuer des réactions catalytiques endothermiques d'un courant entrant, le courant entrant étant divisé en au moins deux courants partiels, qui sont guidés en parallèle à travers des tuyaux de réacteur disposés dans la chambre de chauffe d'un réacteur, remplis au moins partiellement d'une charge en vrac de matériau catalyseur ou d'une garniture structurée à action catalytique ou au moins partiellement revêtus en surface à l'intérieur d'un matériau à action catalytique, chacun d'eux étant façonné de telle sorte que les courants partiels puissent être conduits en au moins deux passages totalement ou partiellement à travers la chambre de chauffe, les directions d'écoulement de deux passages successifs s'étendant essentiellement en sens contraire, **caractérisé en ce que** les tuyaux de réacteur présentent au niveau des passages de chambre de chauffe essentiellement la même longueur et des zones parallèles, qui sont formées par des pièces de tuyau en ligne droite, qui sont reliées les unes aux autres par l'intermédiaire de tuyaux de liaison appropriés et la chambre de chauffe est équipée d'au moins un brûleur, qui assure un brassage intense de l'atmosphère de la chambre de chauffe.

5. Dispositif selon la revendication 4, **caractérisé en ce que** le ou les brûleurs sont disposés sur le fond et/ou sur le toit et/ou sur les parois latérales de la chambre de chauffe.

6. Dispositif selon une des revendications 4 ou 5, **caractérisé en ce que** les brûleurs produisent des gaz de combustion, qui présentent une impulsion de sortie élevée.

7. Dispositif selon une des revendications 4 à 6, **caractérisé en ce que** la chambre de combustion contient des éléments encastrés appropriés afin de soumettre à des turbulences et guider les gaz de combustion produits par les brûleurs.
